# EUROPEAN PATENT APPLICATION

(11) **EP 4 714 697 A1**
(43) Date of publication of application: **25.03.2026**
(21) Application number: 25198002.5
(22) Date of filing: 26.08.2025
(51) Int. Cl.: B60K 1/04, B60L 50/64, B60L 50/60, H01M 50/242

(54) **BATTERY MOUNTING STRUCTURE FOR VEHICLE, VEHICLE, AND BATTERY MOUNTING METHOD FOR VEHICLE**

(30) Priority: 24.09.2024 JP 2024165638
(71) Applicant: MAZDA MOTOR CORPORATION, Hiroshima 730-8670 (JP)
(72) Inventor: NAKAGAWA, Kohya, Aki-gun, Hiroshima, 730-8670 (JP); KAWAMURA, Chikara, Aki-gun, Hiroshima, 730-8670 (JP)
(74) Representative: Müller-Boré & Partner Patentanwälte PartG mbB

(57) **Abstract**

The electric vehicle includes a plurality of four or more battery modules 10 and a plurality of fixing portions 21 individually fixing the plurality of battery modules 10 to a vehicle body 1. The plurality of battery modules 10 is disposed in series in a predetermined direction. At least two sets of the battery module 10 and the fixing portion 21 has k/m as reference k/m. The reference k/m falls within a range of 1.42 × 10⁵ to 1.85 × 10⁷ [N/(m · kg)]. When, k/m that is greater than the reference k/m and is the greatest is maximum k/m, k/m that is less than the reference k/m and is the least is minimum k/m, and dispersion of (the reference k/m)/(the reference k/m), (the maximum k/m)/(the reference k/m), and (the minimum k/m)/(the reference k/m) is set as D, the dispersion D is set to satisfy 0.1 < D <8.

## Description

### [Technical Field]

The present invention relates to a battery mounting structure for a vehicle or an electric vehicle. The present invention also relates to a vehicle and a battery mounting method for a vehicle.

### [Background Art]

Conventionally, in an electric vehicle in which a plurality of battery modules is mounted on a vehicle body, Noise, Vibration, and Harshness (roughness and discomfort) that affect ride comfort in a cabin occur due to vibration of each of the plurality of battery modules during travel of a vehicle. Therefore, in the electric vehicle, improvement in NVH performance, which is performance for reducing these noise, vibration, and harshness, is a problem.

Thus, in order to improve the NVH performance, an electric vehicle disclosed in Patent Literature 1 has a structure in which, in a configuration including a battery unit in which a plurality of battery modules is attached in a battery case, attachment rigidity of some of the battery modules is relatively lower than the attachment rigidity of the other battery modules.

In this structure, a vibration damping property of the entire battery unit is enhanced by lowering a peak value of an amplitude of some of the battery modules when low-frequency vibration of a certain low-frequency band (20 to 50 Hz) generated during the travel of the vehicle is received.

### [Citation List]

### [Patent Literature]

[Patent Literature 1] JP2020-196429A

### [Summary]

### [Technical Problem]

However, in the above structure, the attachment rigidity of some of the plurality of battery modules is reduced to damp the vibration of the entire battery unit. However, since the other battery modules do not contribute to the vibration damping, there is room for improvement in NVH performance.

In addition, in this structure, since a vibration damping effect is achieved by lowering the peak value of the amplitude only in the vicinity of a specific frequency among the narrow low-frequency band (20 to 50 Hz), it is difficult to improve the NVH performance in a wide frequency band generated during the travel of the vehicle.

The invention has been made in view of the above-described circumstance, and therefore has an object of providing a battery mounting structure for an electric vehicle capable of improving NVH performance.

### [Solution to Problem]

The above problem is solved by the invention as defined in independent claims. Particularly, a battery mounting structure for a vehicle or an electric vehicle includes: a vehicle body; a plurality of four or more of battery modules; and a plurality of four or more of fixing portions individually fixing the plurality of battery modules to the vehicle body. The battery mounting structure may further include a pair of left and right front wheels attached to the vehicle body at positions on a vehicle front side of the plurality of battery modules in the vehicle body in a rotatable manner or a freely rotatable manner. The plurality of battery modules is disposed in series in a predetermined direction, which may be a vehicle front-rear direction. When support rigidity of the fixing portion is k [N/m], and mass of the battery module is m [kg], k/m of at least two sets of the battery module and the fixing portion among all sets of the battery module and the fixing portion is reference k/m, the reference k/m falls within a range of 1.42 × 10⁵ to 1.85 × 10⁷ [N/(m · kg)], and when, of k/m of all the sets of the battery module and the fixing portion, k/m that is greater than the reference k/m and is the greatest is maximum k/m, of k/m of all the sets of the battery module and the fixing portion, k/m that is less than the reference k/m and is the least is minimum k/m, and dispersion of (the reference k/m)/(the reference k/m), (the maximum k/m)/(the reference k/m), and (the minimum k/m)/(the reference k/m) is set as D, the dispersion D is set to satisfy 0.1 < D <8.

In such a configuration, it is possible to improve NVH performance by effectively damping vibration of the vehicle body in a wide frequency band, e.g., 100 to 400 [Hz], by using all of the plurality of battery modules and the plurality of fixing portions for fixing those. More specifically, the vibration is damped as follows.

In the above configuration, the vibration, which is input from the front wheels to the vehicle body, is sequentially transmitted to four or more of the plurality of battery modules, which are disposed in series in the predetermined direction, via the fixing portions, each of which fixes respective one of the battery modules to the vehicle body.

Of all the sets of the battery module and the fixing portion, k/m of at least two sets of the battery module and the fixing portion is the reference k/m. The reference k/m is set within the range of 1.42 × 10⁵ to 1.85 × 10⁷ [N/(m · kg)]. Those at least two sets of the battery module and the fixing portion may be configured to reduce a vibration in a range of 100 to 400 [Hz] (or about 100 to about 400 [Hz]), particularly a vibration at 126 [Hz] or about 126 [Hz].

In addition, when k/m, which is greater than the reference k/m and is the greatest k/m of k/m of all the sets of the battery module and the fixing portion, is the maximum k/m, k/m, which is less than the reference k/m and the least k/m of k/m of all the sets of the battery module and the fixing portion, is the minimum k/m, and the dispersion of (the reference k/m)/(the reference k/m), (the maximum k/m)/(the reference k/m), and (the minimum k/m)/(the reference k/m) is set as D, the dispersion D is set to satisfy 0.1 < D <8.

One or more sets of the battery module and the fixing portion other than the above at least two sets of the battery module and the fixing portion may be configured to reduce a vibration above or below 126 [Hz] e.g., in the range of 100 to 400 [Hz] (or about 100 to about 400 [Hz]).

As a result, in the frequency band of the vibration input to the vehicle body during the travel of the vehicle, in the fixing portion, the dissipation and the interference of the vibration energy occur to the vibration that is sequentially transmitted to each of the battery modules in series in the predetermined direction. That is, it is possible to achieve the vibration damping effect by so-called meta-damping (meta-resonance) for continuously damping the vibration along a transmission direction of the vibration by using weight of the four or more battery modules arranged in series and the loss factor or the damping characteristic of the fixing portions thereof.

Just as described, it is possible to improve the NVH performance of the vehicle by effectively blocking and suppressing the transmission of the vibration, which is input from the front wheels to the vehicle body, to the inside of the cabin by using the collection of the plural battery modules and the fixing portions for those.

Moreover, in the above configuration, k/m of at least two sets of the battery module and the fixing portion is set as the reference k/m and within the range of 1.42 × 10⁵ to 1.85 × 10⁷ [N/(m · kg)], with the high vibration damping effect. Meanwhile, there are two sets having k/m significantly deviating from this reference k/m, that is, the set of the battery module and the fixing portion having k/m as the maximum k/m greater than the reference k/m, and the set of the battery module and the fixing portion having k/m as the minimum k/m less than the reference k/m.

In such a configuration where k/m is dispersed, as described above, the dispersion D is set to satisfy 0.1 < D < 8 when the dispersion of (the reference k/m)/(the reference k/m), (the maximum k/m)/(the reference k/m), and (the minimum k/m)/(the reference k/m) is set as D. As a result, the resonance frequency is dispersed while the vibration damping effect is achieved between the plural sets of the battery module and the fixing portion. In this way, it is possible to enlarge the frequency band (the band gap) in which vibration damping is generated to block the vibration transmission. As a result, it is possible to improve the NVH performance by effectively damping the vibration of the vehicle body in the wide frequency band.

For example, of the total number of the sets of the battery module and the fixing portion, k/m of half sets of the battery module and fixing portion is preferably the reference k/m.

According to such a configuration, since k/m of the half of the total number of the sets of the battery module and the fixing portion is set as the reference k/m within the range of 1.42 × 10⁵ to 1.85 × 10⁷ [N/(m · kg)] having the high vibration damping effect, it is possible to reliably improve the vibration damping effect and to further improve the NVH performance.

### [Advantageous Effects]

As described above, according to the battery mounting structure for the electric vehicle in the invention, the NVH performance can be improved.

### [Brief Description of Drawings]

[FIG. 1] FIG. 1 is a plan view illustrating an overall configuration of a vehicle lower portion of an electric vehicle, to which a battery mounting structure for an electric vehicle according to an embodiment of the invention is applied.
[FIG. 2] FIG. 2 is a cross-sectional view illustrating a battery module and a fixing portion in a battery pack in FIG. 1.
[FIG. 3] FIG. 3 is an enlarged cross-sectional view of the fixing portion in FIG. 2.
[FIG. 4] FIG. 4 is a perspective view of the battery pack and the fixing portion in FIG. 2.
[FIG. 5] FIG. 5 is a schematic view of a vibration model of a multi-mass point dispersion type that is formed by a plurality of the battery modules and a plurality of the fixing portions in the battery pack in FIG. 1 and performs meta-damping, and as an example of the embodiment of the invention, a vibration model in which k/m as a ratio of support rigidity k of the fixing portion to mass m of the battery module differs from k1/m1 to k4/m4.
[FIG. 6] FIG. 6 is a graph illustrating a relationship between dispersion D and a transfer function (FRF OA) when dispersion of (reference k/m)/(reference k/m) and (maximum k/m)/(reference k/m) and (minimum k/m)/(reference k/m) is D for k/m as a ratio between the support rigidity k of the fixing portion and the mass m of the battery module in the battery mounting structure.
[FIG. 7] FIG. 7 is a graph illustrating a relationship between k/m, which is the ratio between the support rigidity k of the fixing portion and the mass m of the battery module in the battery mounting structure in the present embodiment, and the number of modules N, which is the number of the battery modules corresponding to the respective k/m.
[FIG. 8] FIG. 8 is a graph illustrating a relationship between module support rigidity/module weight and the transfer function in regard to the battery mounting structure including the battery module and the fixing portion serving as the reference k/m according to the embodiment of the invention and a conventional structure as a comparative example.
[FIG. 9] FIG. 9 is a chart schematically illustrating a meta-damping phenomenon, occurrence of which is desired in the battery mounting structure in the invention.
[FIG. 10] FIG. 10 is a chart schematically illustrating a resonance phenomenon as a comparative example with meta-damping.
[FIG. 11] FIG. 11 is a graph illustrating a relationship between a frequency and the transfer function for illustrating interruption of an elastic wave in a wide frequency range by meta-damping that occurs in the invention.
[FIG. 12] FIG. 12 is a graph illustrating a relationship between the frequency and the transfer function for illustrating dispersion of a resonance peak at a specific frequency by a dynamic vibration absorber as a comparative example with meta-damping.
[FIG. 13] FIG. 13 is a graph illustrating a relationship between the frequency and the transfer function for illustrating a reduction in the resonance peak at the specific frequency only by damping as the comparative example with meta-damping.

### [Description of Embodiments]

Hereinafter, a battery mounting structure for a vehicle or an electric vehicle according to an embodiment of the invention will be described in detail with reference to the drawings.

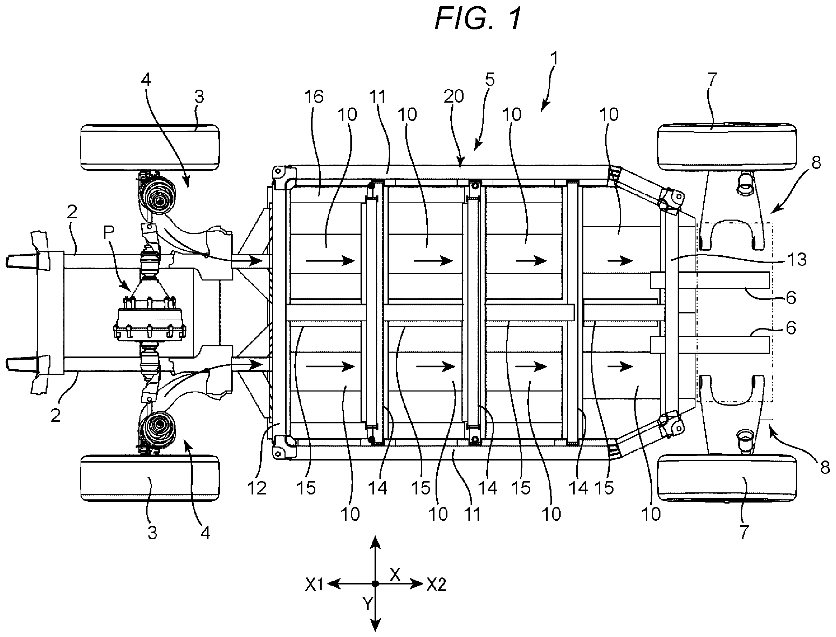

As illustrated in FIG. 1, a vehicle lower portion of the vehicle including a battery mounting structure as an embodiment of the invention may have a structure in which a casing 20 of a battery pack 5 is integrated with a vehicle body 1. Such a structure is a structure in which a battery module 10 is directly mounted on the vehicle body 1, and is referred to as a so-called skateboard structure. The vehicle may be an electric vehicle.

For example, as illustrated in FIGs. 1 to 2, the vehicle, particularly the vehicle lower portion includes: the vehicle body 1 integrated with the casing 20; one or a plurality of the battery modules 10 (eight in FIG. 1) mounted on the casing 20 of the vehicle body 1; and a pair of left and right front wheels 3. The vehicle, particularly the vehicle lower portion may further include: a pair of left and right rear wheels 7; and a drive unit P that includes an electric motor for driving the pair of front wheels 3.

The battery pack 5 includes the plurality of battery modules 10 (eight in FIG. 1), the casing 20 that accommodates the battery modules 10, and a plurality of fixing portions 21 that individually fixes the plural battery modules 10 to the casing 20.

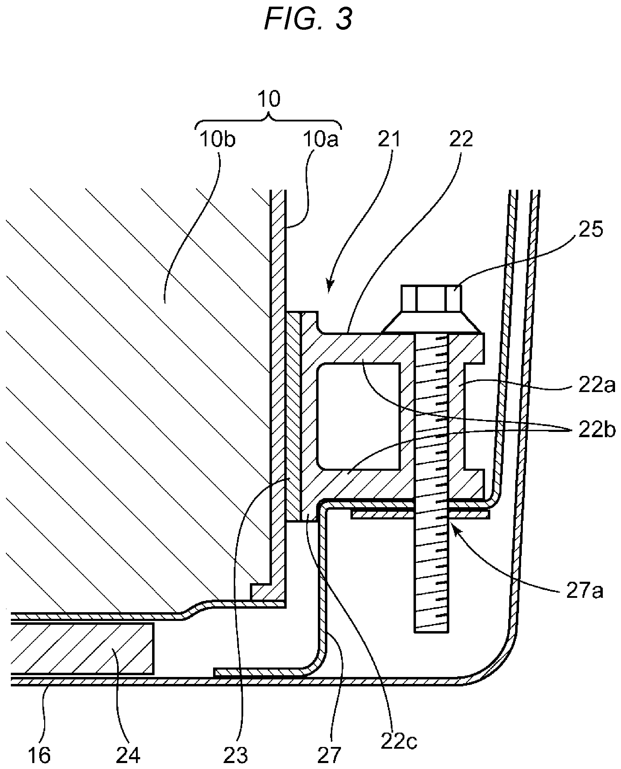

As illustrated in FIGs. 3 to 4, for example, each of the battery modules 10 includes: a battery body portion 10b made of a secondary battery such as a lithium-ion battery; and a metallic outer shell 10a covering the battery body portion 10b.

In the invention, four or more of the battery modules 10 are disposed in series in a predetermined direction. In the present embodiment illustrated in FIG. 1, they are disposed in series in an advancing direction of a vibration wave input from the front wheels 3, that is, disposed in series in the vehicle front-rear direction X.

Particularly, as illustrated in FIG. 1, groups of four or more battery modules 10 in two rows may be disposed to be separated from each other in a vehicle width direction Y. The four battery modules 10 in each of the rows may be disposed at equally-spaced intervals in the vehicle front-rear direction X. One group of four or more battery modules 10 in one row may be disposed in the vehicle.

In the invention, since the above battery modules 10 only need to be "disposed in series in the predetermined direction", as a modified example, they may be disposed in series in the advancing direction of the vibration wave transmitted in the vehicle width direction Y from side sills on both sides in the vehicle width direction or side members 11 described below, that is, four or more thereof may be disposed in series in the vehicle width direction Y.

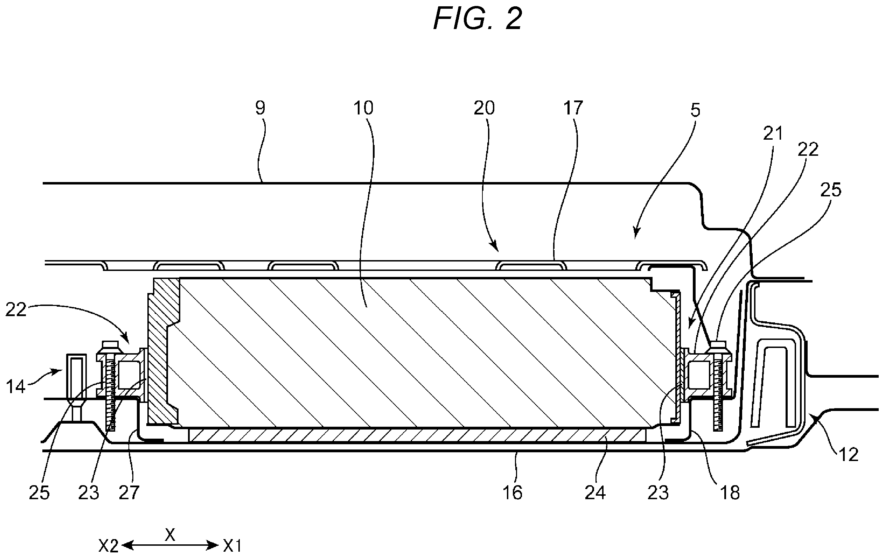

As illustrated in FIG. 1, the vehicle body 1 may include: a pair of front lower arms 2; a pair of front suspensions 4 respectively fixed to the pair of front lower arms 2 and respectively supporting the pair of front wheels 3 in a rotatable manner or a freely rotatable manner; the casing 20 of the battery pack 5 located on a vehicle rear side X2 of the pair of front lower arms 2; a pair of rear lower arms 6 located on the vehicle rear side X2 of the casing 20; a pair of rear suspensions 8 respectively fixed to the pair of rear lower arms 6 and respectively supporting the pair of rear wheels 7 in a rotatable manner or a freely rotatable manner; and/or a floor plate 9 (see FIG. 2) covering an upper portion of the battery pack 5 and constituting a floor portion of a cabin.

The casing 20 of the battery pack 5 may include: a pair of the left and right side members 11 separated from each other in the vehicle width direction Y and extending in the vehicle front-rear direction X; a front cross member 12 extending in the vehicle width direction Y and coupled to front end portions of the pair of side members 11; a rear cross member 13 extending in the vehicle width direction Y and coupled to rear end portions bent inward in the vehicle width direction of the pair of side members 11; one or more, particularly three, intermediate cross members 14 separated from each other in the vehicle front-rear direction X between the front cross member 12 and the rear cross member 13 and extending in the vehicle width direction Y; a bottom plate 16 (see FIGs. 1 to 2) disposed below the cross members 12 to 14; and/or a top plate 17 (see FIG. 2) disposed above the cross members 12 to 14.

Rear end portions of the pair of front lower arms 2 may be coupled to the front cross member 12. Front end portions of the pair of rear lower arms 6 may be coupled to the rear cross member 13.

Each of the plural fixing portions 21 in the battery pack 5 is configured to individually fix respective one of the plural battery modules 10 to the casing 20.

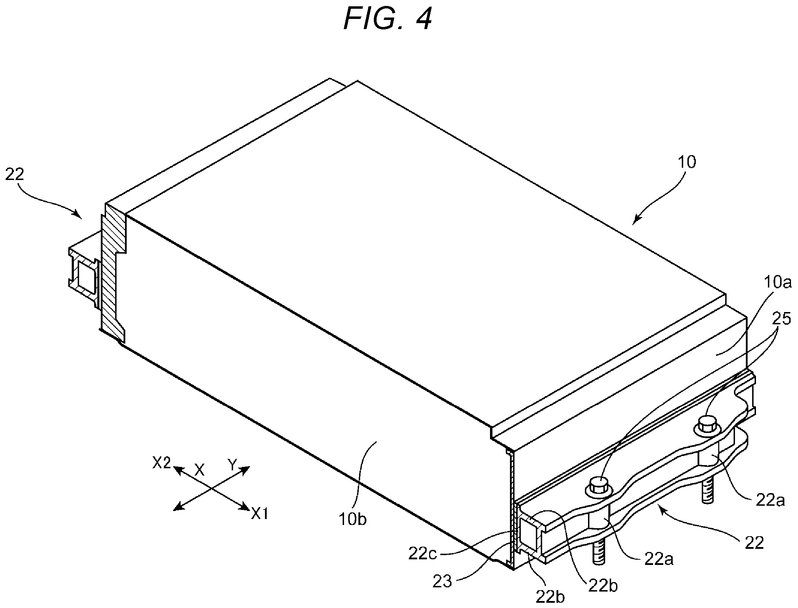

For example, the fixing portion 21 illustrated in FIGs. 2 and 4 is configured to fix both front and rear surfaces in the vehicle front-rear direction X and a bottom surface of each of the battery modules 10 to the bottom plate 16 of the casing 20.

Each of the fixing portions 21 may only need to be configured to have a damping material capable of damping the vibration, and any of various configurations can be adopted. For example, the fixing portion 21 illustrated in FIGs. 2 to 4 has: a pair of front and rear fixing brackets 22; a pair of front and rear damping adhesives 23 (or corresponding to the damping material); an elastic damping filler 24 (corresponding to both the elastic member and the damping material in the invention); one or more, particularly a pair of front rear bolts 25; and/or one or more, particularly a pair of front and rear bracket support members 27.

As the fixing bracket 22 and the bracket support member 27, those conventionally used for fixing the battery modules 10 may be adopted. Thus, it is possible to minimize a structural change from the conventional structure and to secure reliability of fastening of the battery module 10.

As illustrated in FIG. 3, for example, the fixing bracket 22 has: a cylindrical portion 22a that is opened in the up-down direction, and to which the bolt 25 is inserted from above; an opposing portion 22c as a plate-shaped portion opposing the damping adhesive 23; and a pair of upper and lower arm portions 22b coupling the cylindrical portion 22a and the opposing portion 22c. The damping adhesive 23 may be interposed between the outer shell 10a of the battery module 10 and the opposing portion 22c of the fixing bracket 22, and adheres the fixing bracket 22 to the front surface or the rear surface of the outer shell 10a. The elastic damping filler 24 is disposed between the bottom surface of the outer shell 10a of the battery module 10 and the bottom plate 16 of the battery pack 5, and elastically supports the battery module 10. In the casing 20, the bracket support member 27 may be fixed to the bottom plate 16 of the casing 20.

The damping adhesive 23 may only need to have a function to damp the vibration by converting vibration energy into thermal energy, and a material and a physical property are not particularly limited in the invention. The damping adhesive 23 may be a sealer or a rubber-based adhesive, for example, and an adhesive having a vibration damping characteristic due to the Young's modulus at a temperature of 20°C of 500 Mpa or less and a loss factor of 0.1 or greater, or the like is used.

As the elastic damping filler 24, a material having elasticity and the vibration damping characteristic is used, but only needs to have elasticity that at least functions as the elastic member.

The bolt 25 fastens the fixing bracket 22 to the bracket support member 27. For example, the bolt 25 penetrates the cylindrical portion 22a of the fixing bracket 22 and is fastened to a female screw portion 27a in an upper portion of the bracket support members 27.

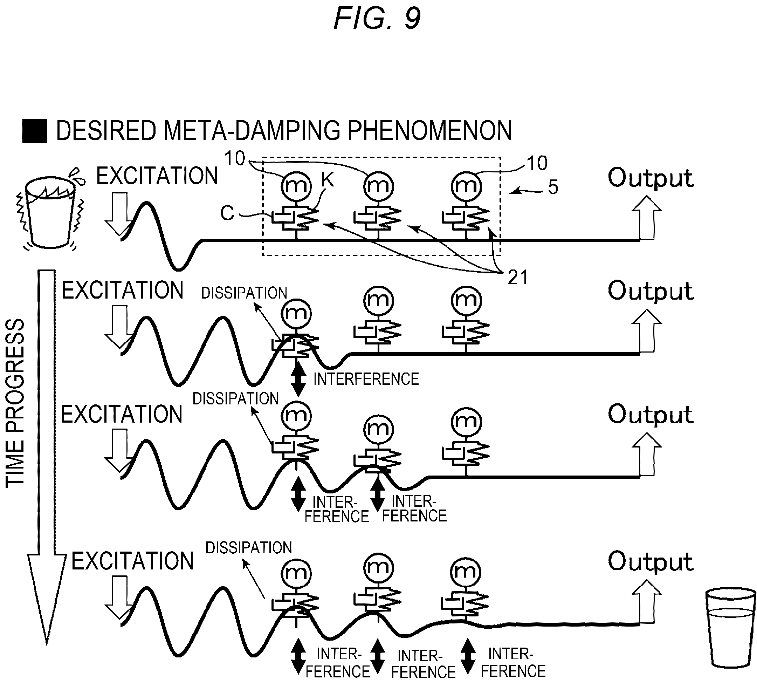

A configuration where the plurality of fixing portions 21 in the battery pack 5 respectively fixes the plurality of battery modules 10 to the bottom plate 16 of the casing 20 may schematically be represented by a vibration of a multi-mass point dispersion type illustrated in FIG. 9.

That is, in the vibration model of the multi-mass point dispersion type illustrated in FIG. 9, the plural battery modules 10, each of which has the mass M, are disposed at equally-spaced intervals in the front-rear direction X on the bottom plate 16 of the casing 20 in the battery pack 5 in FIGs. 1 to 4, and each of the battery modules 10 is fixed to the bottom plate 16 by the fixing portion 21. It can be considered that the fixing portion 21 has a spring constant K and a damping rate C with respect to the elasticity.

The inventors have intensely devised the configuration of the fixing portion 21 to generate meta-damping (meta-resonance) in the battery pack 5 in order to effectively damp the vibration input from the front wheels 3 to the vehicle body 1 by the vibration model of the multi-mass point dispersion type in the battery pack 5 illustrated in FIG. 9.

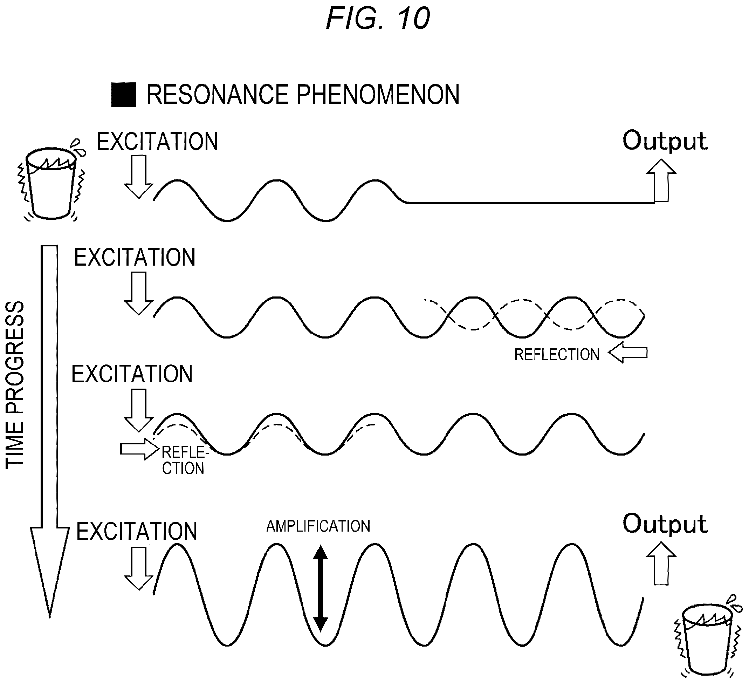

Here, as illustrated in FIG. 9, the meta-damping means to generate a plurality of resonances under a condition of the same excitation frequency in the vibration model of the multi-mass point dispersion type and to block the vibration transmitted to an output destination (that is, to generate a band gap). For example, as illustrated in FIG. 10, in the normal resonance phenomenon, when the vibration is continuously applied at the same frequency, an input wave resonates with a reflective wave from the output destination, and thus the vibration reaching the output destination is amplified.

However, in the meta-damping illustrated in FIG. 9, even when the plurality of battery modules 10 (having the mass M) in the battery pack and the plurality of fixing portions 21 (having the spring constant K and the damping rate C) that individually support them vibrate continuously at the same frequency, the input wave interferes with each set of the battery module 10 and the fixing portion 21, and the vibration energy is dissipated (that is, vibration damping). In this way, the vibration reaching the output destination is blocked. That is, in the meta-damping, damping is caused by continuous interference so as not to cause amplification due to the resonance. When seen in the entire vehicle body 1 in FIG. 1, the vibration input from the front wheels 3 during the travel of the vehicle is sequentially transmitted to the four battery modules 10, which are aligned in the vehicle front-rear direction X, through the front suspension 4, the front lower arm 2, the front cross member 12, and the bottom wall 16. At this time, each of the battery modules 10 and the fixing portions 21 (see FIG. 2) for fixing those interfere with the vibration and dissipate the vibration energy. In this way, the vibration is gradually reduced toward the vehicle rear side X2 (indicated by arrows in the battery modules 10 in FIG. 1 becoming smaller).

In order to generate damping by meta-damping as described above in the entire battery pack 5 and enable vibration damping in the wide frequency band (the band gap), in the present embodiment, when the support rigidity of the fixing portion 21 is k [N/m] and the mass of the battery module 10 is m [kg], k/m of a set of each of the battery modules 10 and the fixing portion 21 is set as follows.

First, k/m of at least two sets (preferably, a half of the total number of all sets) of the battery modules 10 and the fixing portions 21 among all the sets of the battery module 10 and the fixing portion 21 is reference k/m. The reference k/m is set within a range of 1.42 × 10⁵ to 1.85 × 10⁷ [N/(m · kg)] with the high vibration damping effect.

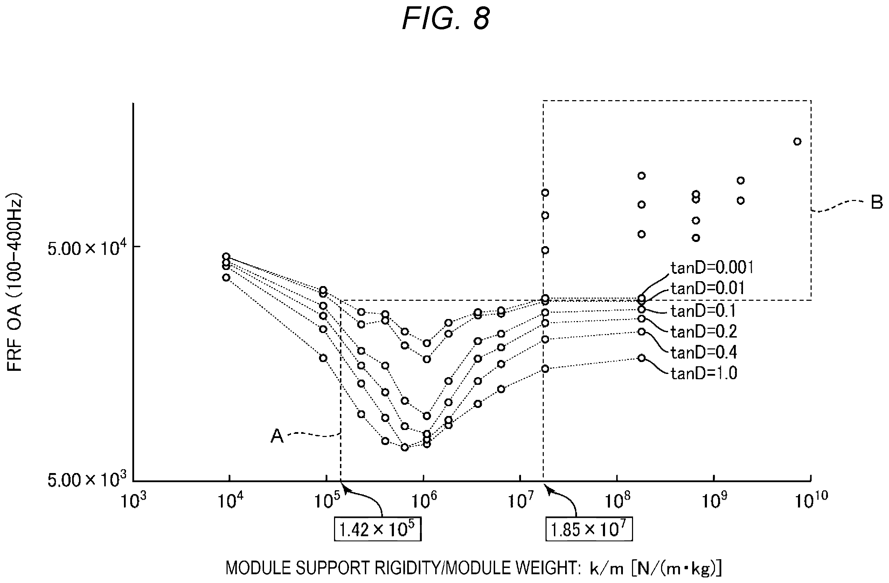

When reference k/m is set within the range of 1.42 × 10⁵ to 1.85 × 10⁷ [N/(m · kg)] as described above, the remarkable vibration damping effect can be achieved by meta-damping of the entire battery pack 5 as in the group A in the graph of FIG. 8. Here, FIG. 8 is a graph illustrating a relationship between the module support rigidity/module weight and the transfer function in regard to a battery mounting structure (group A) including the battery modules 10 and the fixing portions 21 with reference k/m according to the embodiment of the invention and a conventional structure (group B) as a comparative example (more specifically, a structure not having a pair of the damping adhesives 23 and the elastic damping filler 24).

That is, in the group A of the graph in FIG. 8, in a frequency band of the vibration input to the vehicle body 1 during the travel of the vehicle, mainly, in a frequency band of 100 to 400 Hz, even when the loss factor related to damping performance of the fixing portion 21 takes any value of tan D = 0.01 to 1.0, the transfer function is reduced remarkably, and the remarkable vibration damping effect is achieved. In other words, the at least two sets of the battery modules 10 and the fixing portions 21 are configured to reduce the vibration in a range of 100 to 400 Hz (or about 100 to about 400 Hz), particularly the vibration at a predetermined frequency which may be 126 Hz or about 126 Hz. 126 Hz may be a frequency which is relevant to road noise.

The support rigidity may be a tensional rigidity and/or a shear rigidity. The transfer function may be a transfer function from the left front wheel 3 to the right rear wheel 7 or a transfer function from the right front wheel 3 to the left rear wheel 7.

Meanwhile, in the case of the conventional battery module support structure without a damping material as the comparative example illustrated in the group B of FIG. 8, since the module support rigidity/module mass is greater than 1.85 × 10⁷ and the transfer function is much greater than the transfer function in the group A, it is understood that the vibration damping effect by meta-damping is not achieved.

The meta-damping realized by the battery mounting structure in the present embodiment as described above controls the vibration level by a resonance structure of a metamaterial in which the local resonance elements and the damping elements are combined (for example, an entire structure of the battery pack 5 including the plurality of battery modules 10 and the plurality of fixing portions 21) . Accordingly, in a target frequency band (band gap), the vibration is not transmitted to the cabin (the vehicle interior) due to interaction by the resonance structure.

In addition, k/m, which is greater than reference k/m and is maximum k/m, of k/m of all sets of the battery module 10 and the fixing portion 21 is set as maximum k/m. Furthermore, k/m, which is less than the reference k/m and is minimum k/m, of k/m of all the sets of the battery module 10 and the fixing portion 21 is set as minimum k/m.

Moreover, the dispersion of (the reference k/m)/(the reference k/m), (the maximum k/m)/(the reference k/m), and (the minimum k/m)/(the reference k/m) is set as D. This dispersion D is set to satisfy 0.1 < D < 8.

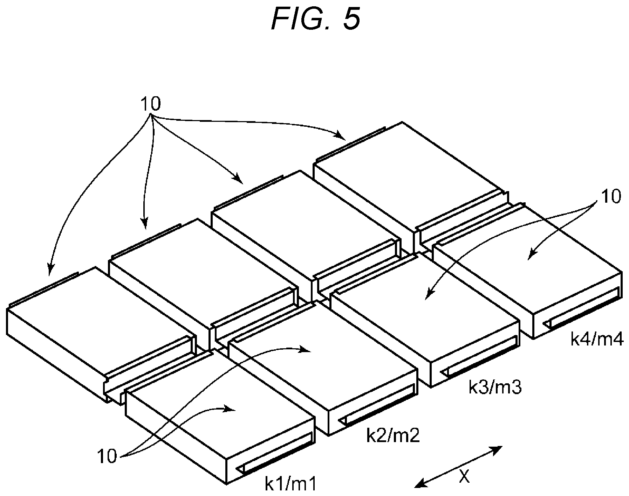

For example, the reference k/m, the maximum k/m, and the minimum k/m can be considered as follows. In regard to the plural (for example, four or more) battery modules 10 disposed in series in the vehicle front-rear direction X illustrated in FIG. 5, k/m, which is a ratio between the mass m of each of the battery modules 10 and the support rigidity k of the fixing portion 21 for fixing respective one of the battery modules 10, is expressed as k1/m1, k2/m2, k3/m3, k4/m4.

These k1/m1, k2/m2, k3/m3, k4/m4... are not necessarily the same, there may be at least two thereof in the setting range of the above reference k/m having the high vibration damping effect, and at least one each of maximum k/m as a maximum value that is a greater value than reference k/m and minimum k/m as a minimum value that is a value less than reference k/m may be provided.

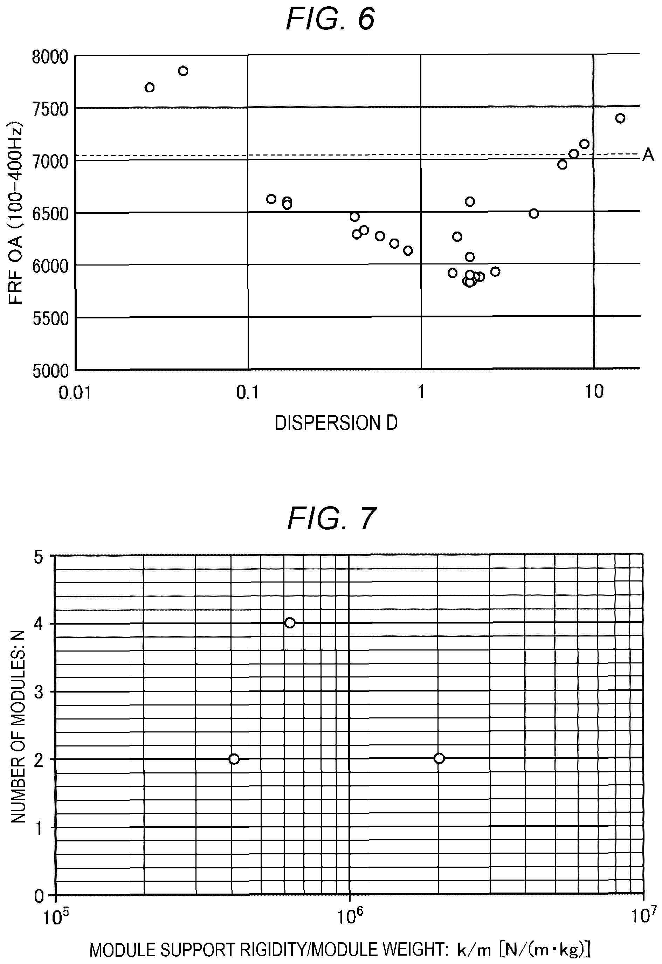

For example, as illustrated in the graph of FIG. 7, when a model having the eight battery modules 10 as the total number of modules N, in the setting range of the reference k/m as described above, k/m that is a value slightly less than 10⁶ N/(m · kg) and whose number of modules N is four as the largest is the reference k/m, k/m (the number of modules is two) that is a value greater than the reference k/m and is the maximum value is the maximum k/m, and k/m (the number of modules is two) that is a value less than the reference k/m and is the minimum value is the minimum k/m.

As described above, when the reference k/m, the maximum k/m, and the minimum k/m are determined, it is possible to determine the dispersion D of (the reference k/m)/(the reference k/m), (the maximum k/m)/(the reference k/m), and (the minimum k/m)/(the reference k/m).

A graph in FIG. 6 is a graph in which a horizontal axis represents the dispersion D and a vertical axis represents a transfer function (FRF (Frequency Response Function) OA) of the vibration (so-called road noise) in the vicinity of 100 Hz to 400 Hz, which is input from the front wheels 3 and transmitted to the vehicle body 1 during the travel of the vehicle, and illustrates a relationship between these dispersion D and transfer function (FRF OA).

As illustrated in the graph of FIG. 6, it is understood that, when this dispersion D is set to satisfy 0.1 < D < 8, the transfer function (FRF OA) of the vibration (so-called road noise) in the vicinity of 100 Hz to 400 Hz, which is input from the front wheels 3 and transmitted to the vehicle body 1 during the travel of the vehicle, clearly becomes less than the transfer function A of a model without the dispersion (that is, a model in which k/m of all the battery modules 10 is the same). Accordingly, when the dispersion D in relation to k/m is dispersed within the above range as in the present embodiment, the vibration damping effect can be achieved in the wide frequency band (band gap).

In other words, the minimum value "0.1" and the maximum value "8" of the dispersion D may be determined based on the dispersion D at which the FRF OA is less than the transfer function A, as shown in FIG. 6. For example, the target frequency band (band gap) of the vibration to be reduced is 126Hz and/or the transfer function A of the model without the dispersion is 7041.

For example, the support rigidity k of the fixing portion 21 is the support rigidity of the entire fixing portion 21 in consideration of the shear rigidity of the pair of front and rear damping adhesives 23 included in the fixing portion 21 and compression rigidity of the elastic damping filler 24. The support rigidity k may be set such that the reference k/m falls within the above numerical range according to the mass m of the battery module 10. Furthermore, the reference k/m, the maximum k/m, and the minimum k/m are set such that the dispersion D falls within the above setting range.

Here, in the case where the dispersion D is set within the above setting range (0.1 < D <8), even when the maximum k/m and the minimum k/m fall out of the range of the setting range (1.42 x 10⁵ to 1.85 x 10⁷ [N/(m · kg)] of the reference k/m, it is possible to exert, in the wide frequency band, the vibration damping effect by meta-damping in the entire battery pack 5 including the plurality of battery modules 10 and the fixing portions 21. For example, when the dispersion D satisfies 0.1 < D < 8, (the maximum k/m)/(the reference k/m) may be equal to or lower than 2.7, and (the minimum k/m)/(the reference k/m ) may be equal to or higher than 0.4.

The support rigidity k of the fixing portion 21 may structurally be set to be lower than the rigidity of the casing 20 of the battery pack 5 for accommodating the plurality of battery modules 10. Accordingly, the fixing portion 21 may have a structure other than the structure added with the damping adhesive 23 and the elastic damping filler 24 as illustrated in FIGs. 3 and 4.

### (Description of Meta-Damping, Dynamic Vibration Absorber, and Damping)

Here, as a method for reducing the vibration, differences in meta-damping, the dynamic vibration absorber, and damping will be described.

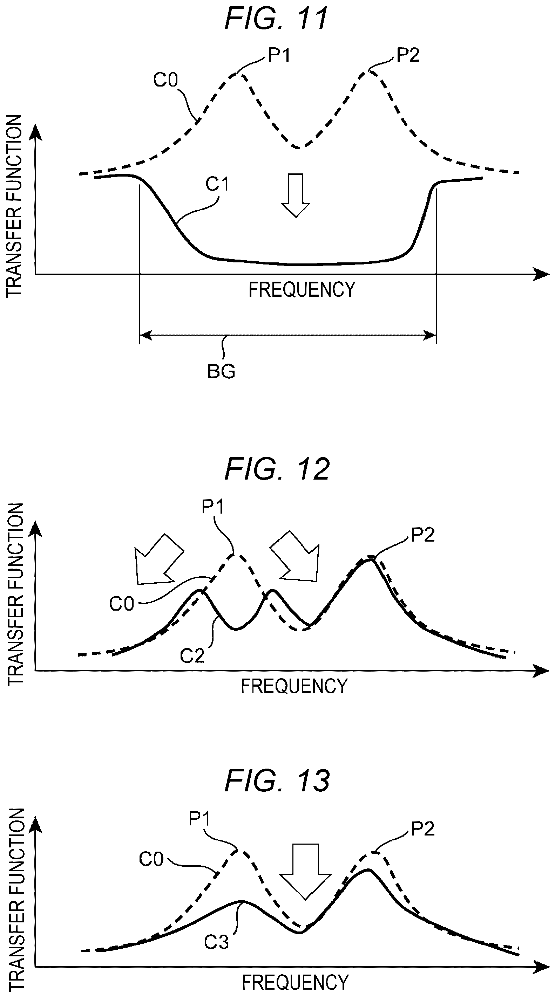

In the meta-damping, as indicated by a curve C1 of a graph in FIG. 11, an input elastic wave C0 is blocked and damped by interference caused by interaction between the input elastic wave C0 (the elastic wave having peaks P1, P2) and a meta-resonator (the vibration model of the multi-mass point dispersion type in FIG. 9 described above), and a band gap BG (that is, a frequency band in which the vibration is blocked and damped) is enlarged to form the wide BG connected as one.

In the dynamic vibration absorber, vibration of a main vibration system is damped by adding an auxiliary mass and transferring the energy to an auxiliary vibration system. More specifically, in the dynamic vibration absorber, as indicated by a curve C2 of a graph in FIG. 12, the vibration is damped by dividing the peak P1 as the large transfer function of the input elastic wave C0 into two small peaks. As a result, the wide band gap BG (see FIG. 11) such as meta-damping does not occur.

In damping, the energy generated by the vibration is dissipated into heat or fluid resistance by a damping material, and the vibration is thereby damped. More specifically, in damping, as indicated by a curve C3 of the graph in FIG. 13, the vibration is damped by lowering the peak P1 having the large transfer function of the input elastic wave C0. Therefore, the band gap BG such as meta-damping is not generated.

### (Characteristics of Present Embodiment)

(1) In the battery mounting structure of the present embodiment, it is possible to improve the NVH performance by effectively damping the vibration of the vehicle body 1 in the wide frequency band by using all of the plurality of battery modules 10 and the plurality of fixing portions 21 for fixing those. More specifically, the vibration is damped as follows.

In the above configuration, the vibration, which is input from the front wheels 3 to the vehicle body, is sequentially transmitted to four or more of the plural battery modules 10, which are disposed in series in the vehicle front-rear direction X, via the fixing portions 21, each of which fixes respective one of the battery modules 10 to the vehicle body.

Of all the sets of the battery modules 10 and the fixing portions 21, k/m of at least two sets of the battery module 10 and the fixing portion 21 is the reference k/m. The reference k/m is set within the range of 1.42 × 10⁵ to 1.85 × 10⁷ [N/(m · kg)].

When k/m, which is greater than the reference k/m and is the greatest k/m of k/m of all the sets of the battery module 10 and the fixing portion 21, is the maximum k/m, k/m, which is less than the reference k/m and the least k/m of k/m of all the sets of the battery module 10 and the fixing portion 21, is the minimum k/m, and the dispersion of (the reference k/m)/(the reference k/m), (the maximum k/m)/(the reference k/m), and (the minimum k/m)/(the reference k/m) is set as D, the dispersion D is set to satisfy 0.1 < D <8.

As a result, in the frequency band of the vibration input to the vehicle body 1 during the travel of the vehicle, in the fixing portion 21, the dissipation and the interference of the vibration energy occur to the vibration that is sequentially transmitted to each of the battery modules 10 in series in the vehicle front-rear direction X (the predetermined direction). That is, it is possible to exert the vibration damping effect by so-called meta-damping (meta-resonance) for continuously damping the vibration along a transmission direction of the vibration by using weight of the four or more battery modules 10 arranged in series and the loss factor or the damping characteristic of the fixing portions 21 thereof.

Just as described, it is possible to improve the NVH performance of the vehicle by effectively blocking and suppressing the transmission of the vibration, which is input from the front wheels 3 to the vehicle body 1, to the inside of the cabin by using the collection of the plural battery modules 10 and the fixing portions 21 for those.

Moreover, in the above configuration, k/m of at least two sets of the battery module 10 and the fixing portion 21 is set as the reference k/m and within the range of 1.42 × 10⁵ to 1.85 × 10⁷ [N/(m · kg)], with the high vibration damping effect. Meanwhile, there are two sets having k/m significantly deviating from this reference k/m, that is, the set of the battery module 10 and the fixing portion 21 having k/m as the maximum k/m greater than the reference k/m, and the set of the battery module 10 and the fixing portion 21 having k/m as the minimum k/m less than the reference k/m.

In such a configuration where k/m is dispersed, as described above, the dispersion D is set to satisfy 0.1 < D < 8 when the dispersion of (the reference k/m)/(the reference k/m), (the maximum k/m)/(the reference k/m), and (the minimum k/m)/(the reference k/m) is set as D. As a result, the resonance frequency is dispersed while the vibration damping effect is achieved between the plural sets of the battery module 10 and the fixing portion 21. In this way, it is possible to enlarge the frequency band (the band gap) in which vibration damping is generated to block the vibration transmission. As a result, it is possible to improve the NVH performance by effectively damping the vibration of the vehicle body 1 in the wide frequency band.

(2)
Particularly, of all the sets of the battery module 10 and the fixing portion 21, k/m of half sets of the battery module 10 and the fixing portion 21 is the reference k/m.

In this configuration, k/m of the half sets of the total sets of the battery module 10 and the fixing portion 21 is set within the range of 1.42 × 10⁵ to 1.85 × 10⁷ [N/(m · kg)] with the high vibration damping effect as the reference k/m. Accordingly, the vibration damping effect can reliably be improved, and the NVH performance can further be improved.

(3)
The battery mounting structure in the present embodiment may be configured to be able to change the maximum k/m and the minimum k/m. For example, the maximum k/m and the minimum k/m may be changed by changing a fastening force of the bolts 25 of the fixing portion 21. In addition, the elastic modulus of any of the damping adhesive 23 and the elastic damping filler 24 of the fixing portion 21 may be replaced with a different elastic modulus.

(4)
Particularly, the two battery modules 10 that are disposed in the vehicle width direction or the up-down direction may be joined to each other rigidly and be thereby integrated. The number of the battery modules 10 disposed in series is not particularly limited. However, the vibration damping effect by meta-damping is enhanced as the number is increased.

(5)
As illustrated in FIG. 3, in the battery mounting structure in the present embodiment, the fixing portion 21 has the fixing bracket 22 that can be coupled to the vehicle body 1, and the damping adhesive 23. The fixing bracket 22 is attached to the battery module 10 via the damping adhesive 23. In this configuration, simply by coupling the fixing bracket 22 of the fixing portion 21 to the vehicle body 1, the plurality of battery modules 10 is individually fixed to the vehicle body 1 via the fixing bracket 22 and the damping adhesive 23 of the fixing portion 21. At the same time, the vibration transmitted from the vehicle body 1 to each of the battery modules 10 is reliably damped through the damping adhesive 23 of the fixing portion 21. Therefore, it is possible to effectively damp the vibration, which is transmitted to the plurality of battery modules 10, and effectively improve the NVH performance of the vehicle.

(6)
In the battery mounting structure in the present embodiment, the fixing portion 21 has the elastic damping filler 24 that is provided on the bottom surface of the battery module 10. According to this configuration, by the elastic damping filler 24 provided on the bottom surface of the battery module 10, the configuration of the fixing portion 21 can be such a configuration where the module support rigidity/module weight falls within the above numerical range, and the NVH performance can further reliably be improved. Furthermore, even in the case where an impact load acts on the bottom surface of the battery module 10 when the vehicle drives on a stone on a road surface, or the like, it is possible to alleviate the impact load by the elastic damping filler 24.

(7)
In the battery mounting structure in the present embodiment, the plurality of battery modules 10 is arranged at the equally-spaced intervals in the vehicle front-rear direction X. In this way, it is possible to effectively generate meta-damping and improve the NVH performance by all of the plurality of battery modules 10 and the fixing portions 21 corresponding thereto.

### [Reference Signs List]

1 vehicle body
3 front wheel
5 battery pack
10 battery module
21 fixing portion
22 fixing bracket
23 damping adhesive
24 elastic damping filler

## Claims

1. A battery mounting structure for a vehicle comprising:
a vehicle body (1);
a plurality of four or more of battery modules (10);
and
a plurality of four or more of fixing portions (21) individually fixing the plurality of battery modules (10) to the vehicle body (1), wherein
the plurality of battery modules (10) is disposed in series in a predetermined direction,
when rigidity of the fixing portion (21) is k [N/m], and mass of the battery module (10) is m [kg],
k/m of at least two sets of the battery module (10) and the fixing portion (21) among all sets of the battery module (10) and the fixing portion (21) is reference k/m,
the reference k/m falls within a range of 1.42 × 10⁵ to 1.85 × 10⁷ [N/(m · kg)], and
when, of k/m of all the sets of the battery module (10) and the fixing portion (21), k/m that is greater than the reference k/m and is the greatest is maximum k/m,
of k/m of all the sets of the battery module (10) and the fixing portion (21), k/m that is less than the reference k/m and is the least is minimum k/m, and
dispersion of (the reference k/m)/(the reference k/m), (the maximum k/m)/(the reference k/m), and (the minimum k/m)/(the reference k/m) is D,
the dispersion D satisfies 0.1 < D <8.

2. The battery mounting structure according to claim 1, further comprising
a pair of left and right front wheels (3) rotatably attached to the vehicle body (1) at positions on a vehicle front side of the plurality of battery modules (10) in the vehicle body (1).

3. The battery mounting structure according to claim 1 or 2, wherein
of the total number of the sets of the battery module (10) and the fixing portion (21), k/m of half sets of the battery module (10) and fixing portion (21) is the reference k/m.

4. The battery mounting structure according to any one of the preceding claims, wherein
the battery mounting structure comprises four battery modules (10) disposed in series in the predetermined direction and four fixing portions (21) individually fixing the four battery modules (10) to the vehicle body (1),
a first k/m and a second k/m of two sets of the battery module (10) and the fixing portion (21) are a first reference k/m and a second reference k/m, which fall within the range of 1.42 × 105 to 1.85 x 107 [N/(m · kg)],
k/m that is greater than the first reference k/m and the second reference k/m is the maximum k/m,
k/m that is less than the first reference k/m and the second reference k/m is the minimum k/m, and
dispersion of (the first reference k/m)/(the second reference k/m), (the maximum k/m)/(the second reference k/m), and (the minimum k/m)/(second reference k/m) satisfies 0.1 < D <8.

5. The battery mounting structure according to any one of the preceding claims, wherein the at least two sets of the battery module (10) and the fixing portion (21) are configured to reduce a vibration in a range of 100 to 400 Hz or a range of about 100 to about 400 Hz.

6. The battery mounting structure according to any one of the preceding claims, wherein
the at least two sets of the battery module (10) and the fixing portion (21) are configured to reduce a vibration at a predetermined frequency.

7. The battery mounting structure according to claim 6, wherein
the predetermined frequency is 126 Hz or about 126 Hz.

8. The battery mounting structure according to claim 6 or 7, wherein
a set of the battery module (10) and the fixing portion (21) is configured to reduce a vibration above the predetermined frequency.

9. The battery mounting structure according to any one of claims 6 to 8, wherein
a set of the battery module (10) and the fixing portion (21) is configured to reduce a vibration below the predetermined frequency.

10. The battery mounting structure according to any one of the preceding claims, wherein
the predetermined direction is a vehicle front-rear direction.

11. A vehicle comprising the battery mounting structure according to any one of the preceding claims.

12. A battery mounting method for a vehicle comprising:
disposing a plurality of four or more of battery modules (10) in series in a predetermined direction; and
disposing a plurality of four or more of fixing portions (21) individually fixing the plurality of battery modules (10) to a vehicle body (1), wherein
when rigidity of the fixing portion (21) is k [N/m], and mass of the battery module (10) is m [kg],
k/m of at least two sets of the battery module (10) and the fixing portion (21) among all sets of the battery module (10) and the fixing portion (21) is reference k/m,
the reference k/m falls within a range of 1.42 × 10⁵ to 1.85 × 10⁷ [N/(m · kg)], and
when, of k/m of all the sets of the battery module (10) and the fixing portion (21), k/m that is greater than the reference k/m and is the greatest is maximum k/m,
of k/m of all the sets of the battery module (10) and the fixing portion (21), k/m that is less than the reference k/m and is the least is minimum k/m, and
dispersion of (the reference k/m)/(the reference k/m), (the maximum k/m)/(the reference k/m), and (the minimum k/m)/(the reference k/m) is set as D,
the dispersion D is set to satisfy 0.1 < D <8.

13. The method according to claim 12, wherein
four battery modules (10) are disposed in series in the predetermined direction, and
four fixing portions (21) individually fix the four battery modules (10) to the vehicle body (1),
a first k/m and a second k/m of two sets of the battery module (10) and the fixing portion (21) are a first reference k/m and a second reference k/m, which fall within the range of 1.42 × 105 to 1.85 x 107 [N/(m · kg)],
k/m that is greater than the first reference k/m and the second reference k/m is the maximum k/m,
k/m that is less than the first reference k/m and the second reference k/m is the minimum k/m, and
dispersion of (the first reference k/m)/(the second reference k/m), (the maximum k/m)/(the second reference k/m), and (the minimum k/m)/ (the second reference k/m) is set to satisfy 0.1 < D <8.

14. The method according to claim 11 or 12, further comprising configuring the at least two sets of the battery module (10) and the fixing portion (21) to reduce a vibration in a range of 100 to 400 Hz or a range of about 100 to about 400 Hz.

15. The method according to claim 14, wherein the at least two sets of the battery module (10) and the fixing portion (21) are configured to reduce a vibration at a predetermined frequency, particularly at 126 Hz or about 126 Hz.
